(19) Europäisches Patentamt
European Patent Office
Office européen des brevets

(11) **EP 3 881 164 B1**

(12) **FASCICULE DE BREVET EUROPEEN**

(45) Date de publication et mention
de la délivrance du brevet:
**26.10.2022 Bulletin 2022/43**

(21) Numéro de dépôt: **19801815.2**

(22) Date de dépôt: **07.11.2019**

(51) Classification Internationale des Brevets (IPC):
*G06F 3/01* *(2006.01)*  *G06F 3/0362* *(2013.01)*
*G06F 1/3234* *(2019.01)*  *G06F 1/3296* *(2019.01)*
*G06F 3/03* *(2006.01)*

(52) Classification Coopérative des Brevets (CPC):
**G06F 3/016; G06F 1/325; G06F 1/3296;
G06F 3/03;** Y02D 10/00

(86) Numéro de dépôt international:
**PCT/EP2019/080463**

(87) Numéro de publication internationale:
**WO 2020/099224 (22.05.2020 Gazette 2020/21)**

(54) **INTERFACE HAPTIQUE**

HAPTISCHE BENUTZERSCHNITTSTELLE

HAPTIC INTERFACE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.11.2018 FR 1860422**

(43) Date de publication de la demande:
**22.09.2021 Bulletin 2021/38**

(73) Titulaires:
• **SORBONNE UNIVERSITE
75006 Paris (FR)**
• **Centre national de la recherche scientifique
75016 Paris (FR)**

(72) Inventeurs:
• **HAYWARD, Vincent
75013 PARIS (FR)**
• **HALIYO, Sinan
75011 PARIS (FR)**
• **REGNIER, Stéphane
92270 BOIS-COLOMBES (FR)**
• **WEILL DUFLOS, Antoine
78610 AUFFARGIS (FR)**

(74) Mandataire: **IPAZ
Bâtiment Platon
Parc Les Algorithmes
91190 Saint-Aubin (FR)**

(56) Documents cités:
EP-A1- 2 911 039    US-A1- 2014 368 440
US-A1- 2017 168 773    US-A1- 2018 074 589

EP 3 881 164 B1

## Description

### Domaine technique

La présente invention concerne une interface haptique. Elle concerne aussi un procédé de commande de cette interface haptique.

Une telle interface haptique selon l'invention permet notamment d'économiser de l'énergie.

### Etat de la technique antérieure

On connaît des interfaces haptiques agencées pour exercer une force, typiquement sur une main ou un doigt d'un utilisateur.

Par exemple, les documents de l'art antérieur US 2018/074589 A1, EP 2 911 039 A1, US 2017/168773 A1 et US 2014/368440 A1 décrivent des interfaces haptiques modifiant le signal haptique de différentes manières, en fonction de leurs besoins.

Un problème crucial pour la réalisation commerciale de ces interfaces est le dimensionnement de moteurs capables de résister à l'effort exercé par leurs utilisateurs. Même dans le cas de l'utilisation de transmissions permettant d'amplifier le couple par démultiplication de la vitesse, les moteurs demeurent un élément dominant du coût de fabrication de ces interfaces. Le dimensionnement de ces moteurs est à son tour déterminé par le besoin de dissiper la chaleur produite par effet Joules du courant circulant dans leurs enroulements.

Le but de la présente invention est de proposer une interface haptique :

- plus économe en énergie que selon l'état de la technique antérieure, notamment en énergie dissipée, et/ou
- permettant l'utilisation de moteurs de plus faibles dimensionnements que selon l'état de la technique antérieure.

### Exposé de l'invention

Cet objectif est atteint avec un procédé de commande d'une interface à retour de force haptique, ladite interface comprenant un actionneur, ledit procédé comprenant:

- une réception d'une commande initiale agencée pour commander l'actionneur de sorte qu'une force exercée par l'actionneur ou la commande initiale soit égale à :

  ◦ une partie basse fréquence initiale $F_0(t)$ ne comprenant que des fréquences inférieures à une fréquence de coupure,
  ◦ plus une éventuelle partie haute fréquence $\tilde{F}(t)$ ne comprenant que des fréquences supérieures à la fréquence de coupure,

- une transformation de la commande initiale en une commande transformée dans laquelle la partie basse fréquence initiale $F_0(t)$ est transformée en une partie basse fréquence modifiée $F(t)$, cette partie basse fréquence modifiée $F(t)$ et/ou la moyenne arithmétique de cette partie basse fréquence modifiée $F(t)$ suivant en amplitude une fonction décroissante et pour laquelle, sur tout intervalle de temps de durée $\Delta t$ entre un instant $t$ et un instant $t+\Delta t$, la partie basse fréquence modifiée $F(t)$ et/ou la moyenne arithmétique de cette partie basse fréquence modifiée $F(t)$ décroit d'une valeur X inférieure ou égale à 10% de la valeur initiale de la partie basse fréquence modifiée $F(t)$ à l'instant $t$, la durée $\Delta t$ de l'intervalle de temps étant supérieure ou égale à 0,3 seconde
- une commande de l'actionneur selon la commande transformée.

La fréquence de coupure est :

- inférieure ou égale à 10Hz, de préférence inférieure ou égale à 5Hz, de préférence inférieure ou égale à 1Hz, et/ou
- supérieure ou égale à 0Hz, de préférence supérieure ou égale à 0,5Hz, de préférence supérieure ou égale à 1Hz.

L'actionneur peut être :

- un moteur et/ou un actionneur mécanique et/ou électromagnétique
- un muscle et/ou actionneur biologique et/ou chimique.

La valeur X est de préférence supérieure ou égale à 1%, de préférence 5%, de la valeur initiale de $F(t)$ à l'instant $t$.

La durée $\Delta t$ de l'intervalle de temps est de préférence supérieure ou égale à 0,5 seconde, de préférence supérieure ou égale à 1 seconde, de préférence supérieure ou égale à 1,4 secondes, de préférence supérieure ou égale à 2 secondes, de préférence supérieure ou égale à 3 secondes.

La durée $\Delta t$ de l'intervalle de temps est de préférence inférieure ou égale à 60 secondes, de préférence inférieure ou égale à 30 secondes, de préférence inférieure ou égale à 10 secondes.

La fonction décroissante de la partie basse fréquence modifiée $F(t)$ en fonction du temps $t$ est de préférence une fonction exponentielle de la forme

$$F(t) = A.\exp\left(\left(\frac{-t}{\tau}\right)\right) + B$$

, la constante A étant un nombre réel positif, la constante B étant un nombre réel, la constante $\tau$ étant un nombre réel positif.

La constante $\tau$ est de préférence un nombre réel positif supérieur ou égal à 1 seconde, de préférence supérieur ou égal à 5 secondes, de préférence supérieur ou égal à 10 secondes.

La constante $\tau$ est de préférence un nombre réel positif inférieur ou égal à 60 secondes, de préférence inférieur ou égal à 50 secondes, de préférence inférieur ou égal à 40 secondes.

La transformation de la commande initiale en la commande transformée comprend de préférence une application d'un filtre passe haut, ayant de préférence une fréquence de coupure :

- inférieure à 0,1 Hz et/ou supérieure à 0,001 Hz,
- de préférence inférieure à 0,05 Hz et/ou supérieure à 0,003 Hz,
- de préférence inférieure à 0,03 Hz et/ou supérieure à 0,005 Hz,
- de préférence inférieure à 0,0265 Hz et/ou supérieure à 0,0057 Hz.

Le procédé selon l'invention peut comprendre une mesure de la force exercée par l'actionneur, et un asservissement de la force exercée par l'actionneur selon la commande transformée.

Le procédé selon l'invention peut être mis en œuvre sur une durée totale d'au moins 1 seconde, de préférence d'au moins 1,4 secondes, de préférence d'au moins 2 secondes, de préférence d'au moins 3 secondes, de préférence d'au moins 10 secondes.

L'actionneur peut exercer des efforts selon plusieurs axes, ledit procédé selon l'invention étant de préférence appliqué à au moins un de ces axes.

Suivant encore un autre aspect de l'invention, il est proposé une interface à retour de force haptique, comprenant :

- des moyens de commandes, agencés et/ou programmés pour :

  • recevoir une commande initiale agencée pour commander un actionneur de sorte qu'une force exercée par l'actionneur ou la commande initiale soit égale à :

    ○ une partie basse fréquence initiale $F_0(t)$ ne comprenant que des fréquences inférieures à une fréquence de coupure,
    ○ plus une éventuelle partie haute fréquence $\tilde{F}(t)$ ne comprenant que des fréquences supérieures à la fréquence de coupure,

  • transformer la commande initiale en une commande transformée dans laquelle la partie basse fréquence initiale $F_0(t)$ est transformée en une partie basse fréquence modifiée F(t), cette partie basse fréquence modifiée F(t) et/ou la moyenne arithmétique de cette partie basse fréquence modifiée F(t) suivant en amplitude une fonction décroissante et pour laquelle, sur tout intervalle de temps de durée Δt entre un instant t et un instant t+Δt, la partie basse fréquence modifiée F(t) et/ou la moyenne arithmétique de cette partie basse fréquence modifiée F(t) décroit d'une valeur X inférieure ou égale à 10% de la valeur initiale de la partie basse fréquence modifiée F(t) à l'instant t, la durée Δt de l'intervalle de temps étant supérieure ou égale à 0,3 seconde

  • commander l'actionneur selon la commande transformée.

La fréquence de coupure est :

- • inférieure ou égale à 10Hz, de préférence inférieure ou égale à 5Hz, de préférence inférieure ou égale à 1Hz, et/ou
- • supérieure ou égale à 0Hz, de préférence supérieure ou égale à 0,5Hz, de préférence supérieure ou égale à 1Hz.

L'actionneur peut être :

- un moteur et/ou un actionneur mécanique et/ou électromagnétique
- un muscle et/ou actionneur biologique et/ou chimique.

L'interface à retour haptique peut comprendre l'actionneur. Cet actionneur est donc de préférence un moteur et/ou un actionneur mécanique et/ou électromagnétique

La valeur X est de préférence supérieure ou égale à 1%, de préférence 5%, de la valeur initiale de F(t) à l'instant t.

La durée Δt de l'intervalle de temps est de préférence supérieure ou égale à 0,5 seconde, de préférence supérieure ou égale à 1 seconde, de préférence supérieure ou égale à 1,4 secondes, de préférence supérieure ou égale à 2 secondes, de préférence supérieure ou égale à 3 secondes.

La durée Δt de l'intervalle de temps est de préférence inférieure ou égale à 60 secondes, de préférence inférieure ou égale à 30 secondes, de préférence inférieure ou égale à 10 secondes.

La fonction décroissante de la partie basse fréquence modifiée F(t) en fonction du temps t est de préférence une fonction exponentielle de la forme

$$F(t) = A.\exp\left(\frac{-t}{\tau}\right) + B$$

, la constante A étant un nombre réel positif, la constante B étant un nombre réel, la constante $\tau$ étant un nombre réel positif.

La constante $\tau$ est de préférence un nombre réel positif supérieur ou égal à 1 seconde, de préférence supérieur ou égal à 5 secondes, de préférence supérieur ou égal à 10 secondes.

La constante $\tau$ est de préférence un nombre réel positif inférieur ou égal à 60 secondes, de préférence inférieur ou égal à 50 secondes, de préférence inférieur ou égal à 40 secondes.

Les moyens de commande comprennent de préférence un filtre passe haut agencé pour transformer la commande initiale en la commande transformée, ce filtre passe haut ayant de préférence une fréquence de coupure :

- inférieure à 0,1 Hz et/ou supérieure à 0,001 Hz,
- de préférence inférieure à 0,05 Hz et/ou supérieure à 0,003 Hz,
- de préférence inférieure à 0,03 Hz et/ou supérieure à 0,005 Hz,
- de préférence inférieure à 0,0265 Hz et/ou supérieure à 0,0057 Hz.

L'interface selon l'invention peut comprendre des moyens pour mesurer la force exercée par l'actionneur, et des moyens d'asservissement de la force exercée par l'actionneur selon la commande transformée.

Les moyens de commande peuvent être agencés et/ou programmés pour recevoir la commande initiale, transformer la commande initiale en la commande transformée et commander l'actionneur selon la commande transformée sur une durée totale d'au moins 1 seconde, de préférence d'au moins 1,4 secondes, de préférence d'au moins 2 secondes, de préférence d'au moins 3 secondes, de préférence d'au moins 10 secondes.

L'actionneur peut être agencé pour exercer des efforts selon plusieurs axes, les moyens de commande étant de préférence agencés et/ou programmés pour recevoir la commande initiale, transformer la commande initiale en la commande transformée et commander l'actionneur selon la commande transformée selon au moins un de ces axes.

**Description des figures et modes de réalisation**

D'autres avantages et particularités de l'invention apparaîtront à la lecture de la description détaillée de mises en œuvre et de modes de réalisation nullement limitatifs, et des dessins annexés suivants :

- la figure 1 est une vue schématique d'un premier mode de réalisation d'interface selon l'invention 101, qui est un mode de réalisation préféré,
- la figure 2 est une vue détaillée des moyens de commande 2 de l'interface 101,
- la figure 3 est une autre vue du premier mode de réalisation d'interface selon l'invention 101,
- les figures 4 à 8 illustrent différentes variantes d'un mode de réalisation de procédé selon l'invention mis en œuvre par l'interface 101.

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour conférer un avantage technique ou à différencier l'invention par rapport à l'état de la technique antérieure.

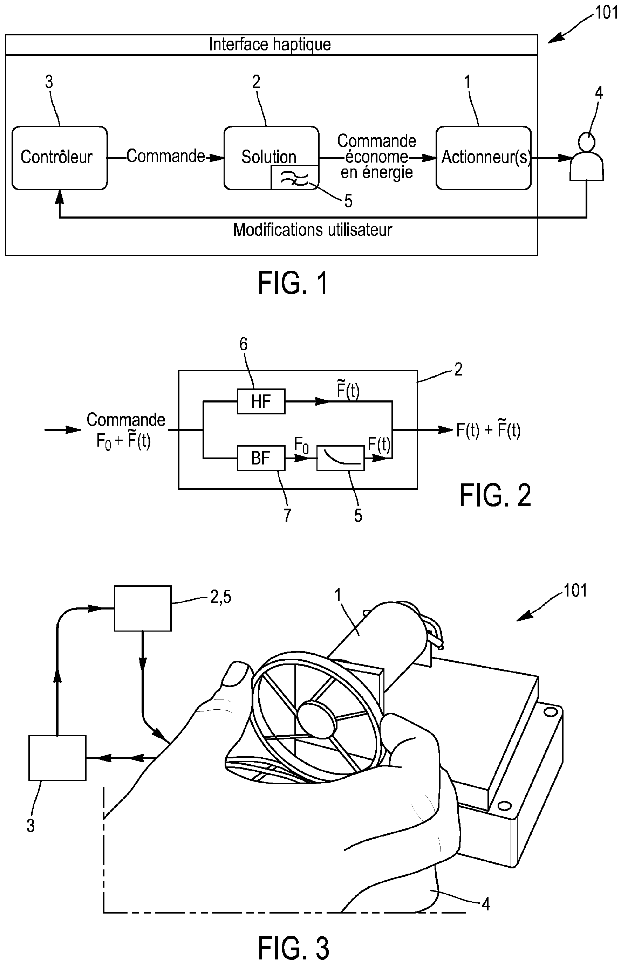

On va tout d'abord décrire, en référence aux figures 1 à 3, un premier mode de réalisation d'interface 101 à retour de force haptique selon l'invention.

L'interface 101 comprend un actionneur 1.

L'actionneur 1 est un moteur et/ou un actionneur mécanique et/ou électromagnétique.

L'interface 101 comprend un contrôleur 3, agencé et/ou programmé pour générer une commande initiale agencée pour commander l'actionneur 1 de sorte qu'une force exercée par l'actionneur 1 (typiquement sur un utilisateur 4) ou la commande initiale soit égale à :

○ une partie basse fréquence initiale $F_0(t)$ ne comprenant que des fréquences inférieures à une fréquence de coupure,
○ plus une partie haute fréquence $\tilde{F}(t)$ ne comprenant que des fréquences supérieures à la fréquence de coupure. Cette partie haute fréquence est optionnelle, dans le cas où la commande initiale est constante ou basse fréquence.

La fréquence de coupure est :

- inférieure ou égale à 10Hz, de préférence inférieure ou égale à 5Hz, de préférence inférieure ou égale à 1Hz, et/ou
- supérieure ou égale à 0Hz, de préférence supérieure ou égale à 0,5Hz, de préférence supérieure ou égale à 1Hz.

Dans ce mode de réalisation non limitatif, cette fréquence de coupure est égale à 1 Hz.

Le contrôleur 3 ne comprend que des moyens techniques. Typiquement, le contrôleur 3 comprend au moins un ordinateur, et/ou une unité centrale ou de calcul, et/ou un circuit électronique analogique (de préférence dédié), et/ou un circuit électronique numérique (de préférence dédié), et/ou un microprocesseur (de préférence dédié), et/ou des moyens logiciels.

La force exercée par l'actionneur 1 (typiquement sur un utilisateur 4) est une force capable d'imposer une accélération selon un axe de translation ou autour d'un axe de rotation (on parle alors de couple).

L'interface 101 comprend des moyens de commandes 2.

L'actionneur 1 est par exemple, comme illustré sur la figure 3, une interface utilisant un seul moteur à courant continu piloté en courant. Le moteur est un moteur Maxon DCX35. Il est alimenté par un amplificateur asservi en courant Maxon Escon 50/5 module piloté par une carte Teensy 3.2. La carte Teensy 3.2 assure de plus la communication avec les moyens de commande 2.

Les moyens de commande 2 ne comprennent que des moyens techniques. Typiquement, les moyens de commande comprennent au moins un ordinateur, et/ou une unité centrale ou de calcul, et/ou un circuit électronique analogique (de préférence dédié), et/ou un circuit électronique numérique (de préférence dédié), et/ou un microprocesseur (de préférence dédié), et/ou des moyens logiciels.

Les moyens de commande 2 sont agencés et/ou programmés pour :

- recevoir la commande initiale
- transformer la commande initiale en une commande transformée dans laquelle la partie basse fréquence initiale $F_0(t)$ (sauf de préférence si c'est une fonction constante nulle) est transformée en une partie basse fréquence modifiée $F(t)$, qui suit en amplitude (ou en valeur absolue) une fonction décroissante et pour laquelle, sur tout intervalle de temps de durée $\Delta t$ entre un instant t et un instant t+$\Delta t$, la partie basse fréquence modifiée $F(t)$ décroit en amplitude (ou en valeur absolue) d'une valeur X inférieure ou égale à 10% de la valeur initiale de la partie basse fréquence modifiée $F(t)$ à l'instant t, la durée $\Delta t$ de l'intervalle de temps étant supérieure ou égale à 0,3 seconde
- commander l'actionneur 1 selon la commande transformée.

La partie basse fréquence modifiée $F(t)$ suit « en amplitude » une fonction globalement décroissante sur $\Delta t$, c'est-à-dire que :

- si cette fonction $F(t)$ est négative, elle est globalement croissante sur $\Delta t$
- si cette fonction $F(t)$ est positive, elle est globalement décroissante sur $\Delta t$.

Sur chaque intervalle de temps $\Delta t$, $F(t)$ est une fonction qui varie différemment par rapport à $F_0(t)$, sauf éventuellement sur les intervalles pour lesquels $F_0(t)$ est une fonction constante nulle. Si la partie basse fréquence initiale $F_0(t)$ reste nulle sur un intervalle de temps, la partie basse fréquence $F(t)$ reste de préférence elle aussi nulle sur cet intervalle de temps.

A chaque instant t, $F(t)$ et $F_0(t)$ sont de préférence de même signe (positifs, négatifs ou nuls).

La valeur X est supérieure ou égale à 1%, de préférence 5%, de la valeur initiale de $F(t)$ à l'instant t.

La durée $\Delta t$ de l'intervalle de temps est supérieure ou égale à 0,5 seconde, de préférence supérieure ou égale à 1 seconde, de préférence supérieure ou égale à 1,4 secondes, de préférence supérieure ou égale à 2 secondes, de préférence supérieure ou égale à 3 secondes. Ce temps doit être suffisamment long pour éviter que l'utilisateur 4 ne sente et ne se rende compte de la décroissance de la force selon $F(t)$.

La durée $\Delta t$ de l'intervalle de temps est inférieure ou égale à 60 secondes, de préférence inférieure ou égale à 30 secondes, de préférence inférieure ou égale à 10 secondes. Ce temps doit être suffisamment court pour que l'économie d'énergie réalisée soit intéressante.

L'invention permet ainsi une commande de l'interface haptique 101 pour réduire la consommation d'énergie. Elle se base sur une particularité de la perception haptique de l'utilisateur 4, qui est peu sensible à la composante continue ou basse fréquence des forces extérieures et ressent uniquement les variations rapides. L'invention permet ainsi une diminution de cette composante continue $F_0(t)$ en $F(t)$ (qui reste inaperçue de l'utilisateur) et donc une diminution de l'énergie dépensée pour générer $F(t)$ qui décroit avec le temps. L'invention permet donc de réduire la consommation énergétique de l'interface haptique 101 sans impacter la qualité du ressenti d'effort.

Des expériences des inventeurs montrent que le sens du toucher n'est pas sensible à des changements lents de forces.

L'invention présente des applications potentielles dans la réalisation d'interface haptique 101 notamment pour les applications mobiles fonctionnant sur batterie et/ou une interface 101 commerciale ou d'évaluation psychophysique. D'un point de vue général elle permet de réduire réchauffement de l'actionneur 1 et donc sa consommation énergétique, et serait utile pour toutes les interfaces impliquées, quelle que soit leur technologie d'actionnement.

Ainsi, l'invention utilise une adaptation aux efforts pour tromper les sens humain de l'utilisateur 4. Au lieu de fournir un effort par exemple constant $F_0(t)$, une décroissance est appliquée à la commande et donc à l'effort $F(t)$ afin de réduire la consommation d'énergie.

L'invention fournie une solution à l'échauffement de l'actionneur 1, notamment s'il s'agit d'un coupleur à courant de Foucault.

L'actionneur 1 peut être utilisé pendant une durée importante sans que son coupleur ne chauffe. Le coefficient de couplage est alors stable et les forces produites sont précises.

Un mode de réalisation préféré de l'invention est d'utiliser, comme fonction décroissante de la partie basse fréquence modifiée $F(t)$ en fonction du temps t, une fonction exponentielle de la forme

$$F(t) = A.\exp\left(\left(\frac{-t}{\tau}\right)\right) + B$$

, la constante A étant un nombre réel positif, la constante B étant un nombre réel, la constante $\tau$ étant un nombre réel positif.

La constante $\tau$ est un nombre réel positif supérieur ou égal à 1 seconde, de préférence supérieur ou égal à 5 secondes, de préférence supérieur ou égal à 10 secondes.

La constante $\tau$ est un nombre réel positif inférieur ou égal à 60 secondes, de préférence inférieur ou égal à 50 secondes, de préférence inférieur ou égal à 40 secondes.

La constante $\tau$ est typiquement égale à 20 secondes $\pm$ 10%.

Ce $\tau$ idéal a été déterminé sur un échantillon de volontaires de sorte que ces volontaires ont en moyenne une probabilité inférieure à 20% de se rendre compte que la force constante ou basse fréquence correspondant à $F_0(t)$ a été remplacée par une force décroissante correspondant à F(t).

Dans une mise en œuvre préférée de l'invention, les moyens de commande 2 comprennent un filtre passe haut 5 agencé pour transformer la commande initiale en la commande transformée.

Le filtre 5 est disposé en aval du contrôleur 3.

Le filtre 5 est disposé en amont de l'actionneur 1.

Le filtre 5 est disposé entre le contrôleur 3 et l'actionneur 1.

Plus exactement, en référence à la figure 2, les moyens de commande 2 comprennent un filtre passe Haut 6 agencé pour sélectionner la partie de la commande initiale correspondant à la partie haute fréquence $\tilde{F}(t)$.

Les moyens de commande 2 comprennent un filtre passe Bas 7 agencé pour sélectionner la partie de la commande initiale correspondant à la partie basse fréquence initiale $F_0(t)$.

Le filtre passe haut 5 est agencé pour transformer la partie basse fréquence initiale $F_0(t)$ en la partie basse fréquence modifiée F(t).

Les moyens de commande comprennent, en parallèle :

- le filtre 6, et
- les filtres 7 puis 5 en série, le filtre 5 étant disposé entre le filtre 7 et l'actionneur 1.

Le filtre passe haut 5 est un filtre de premier ordre de pulsation $\omega_C = \dfrac{1}{\tau} \approx 0,071\,\text{rad/s}$ et donc de fréquence de coupure $f_C = \dfrac{\omega_C}{2\pi} \approx 0,011\ \text{Hz}$ Hz. Il ne change pas le ressenti d'une majorité de personnes 4.

On remarque que la fréquence de coupure $f_c$ du filtre 5 est :

- inférieure à 0,1 Hz et/ou supérieure à 0,001 Hz,

- de préférence inférieure à 0,05 Hz et/ou supérieure à 0,003 Hz,
- de préférence inférieure à 0,03 Hz et/ou supérieure à 0,005 Hz,
- de préférence inférieure à 0,0265 Hz et/ou supérieure à 0,0057 Hz.

L'équation de la fonction de transfert (ou transmittance) du filtre 5 correspondant est :

$$H(j\omega) = \frac{j\dfrac{\omega}{\omega_C}}{1 + j\dfrac{\omega}{\omega_C}}$$

où $f = \omega/2\pi$ est la fréquence du signal entrant dans le filtre 5.

Le filtre 5 est présent sous la forme d'une carte électronique ou sous forme programmée par des moyens logiciels d'un ordinateur faisant partie des moyens de commande 2.

L'interface 101 comprend en outre des moyens pour mesurer la force exercée par l'actionneur 1, et des moyens d'asservissement de la force exercée par l'actionneur 1 selon la commande transformée. Un tel asservissement permet de s'assurer de la bonne valeur de la force exercée par l'actionneur 1 à chaque instant t en fonction de la commande transformée envoyée à l'instant t par les moyens de commande 2 à l'actionneur 1.

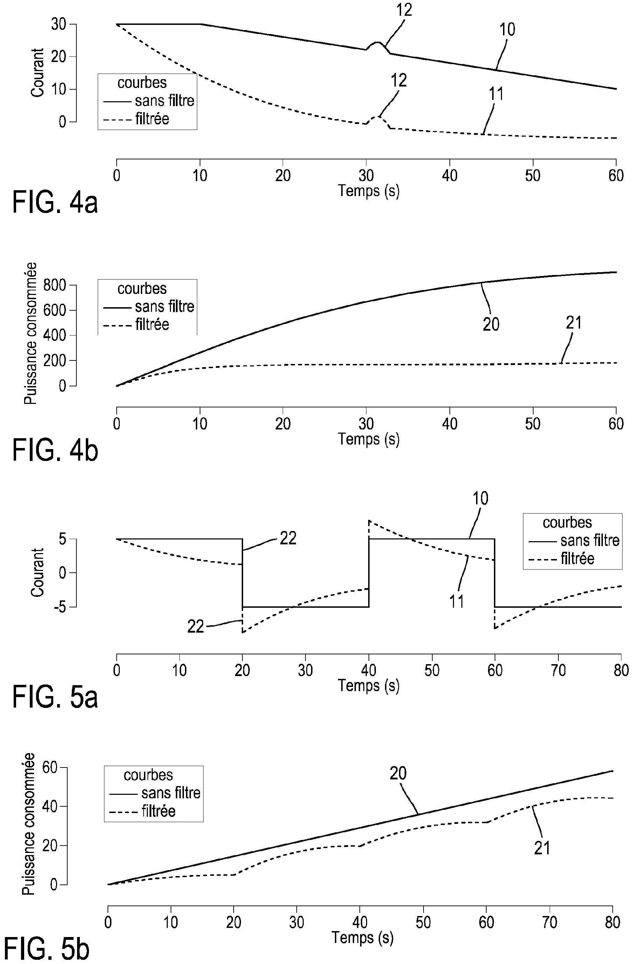

On va maintenant décrire, en références aux figures 4 à 8, plusieurs variantes d'un mode de réalisation préféré d'un procédé de commande de interface 101 à retour de force haptique, ladite interface comprenant l'actionneur1.

Ce mode de réalisation de procédé selon l'invention comprend une réception de la commande initiale agencée pour commander l'actionneur 1 de sorte que la force exercée par l'actionneur 1 sur l'utilisateur 4 ou la commande initiale soit égale à :

◦ la partie basse fréquence initiale $F_0(t)$ ne comprenant que des fréquences inférieures à la fréquence de coupure,
◦ plus l'éventuelle partie haute fréquence $\tilde{F}(t)$ ne comprenant que des fréquences supérieures à la fréquence de coupure,

**Commande initiale** : pour $F_0(t) + \tilde{F}(t)$

Ce mode de réalisation de procédé selon l'invention comprend ensuite une transformation de la commande initiale en la commande transformée dans laquelle la partie basse fréquence initiale $F_0(t)$ (sauf de préférence si c'est une fonction constante nulle) est transformée en une partie basse fréquence modifiée F(t) qui suit une fonction décroissante en amplitude et pour laquelle, sur tout intervalle de temps de durée $\Delta t$ entre un instant

t et un instant t+Δt, la partie basse fréquence modifiée F(t) décroit en amplitude d'une valeur X inférieure ou égale à 10% de la valeur initiale de la partie basse fréquence modifiée F(t) à l'instant t, la durée Δt de l'intervalle de temps étant supérieure ou égale à 0,3 seconde :

**Commande initiale:** pour $F_0(t) + \tilde{F}(t)$
**=>Commande transformée:** pour $F(t) + \tilde{F}(t)$

Ce mode de réalisation de procédé selon l'invention comprend ensuite une commande de l'actionneur selon la commande transformée.

Les valeurs inférieures ou supérieures précédemment données dans le cadre de la description de l'interface 101 pour la valeur X et la durée Δt restent valables.

La partie basse fréquence modifiée F(t) en fonction du temps t est une fonction décroissante et est :

- de préférence une fonction exponentielle de la forme

$$F(t) = A.\exp\left(\left(\frac{-t}{\tau}\right)\right) + B$$

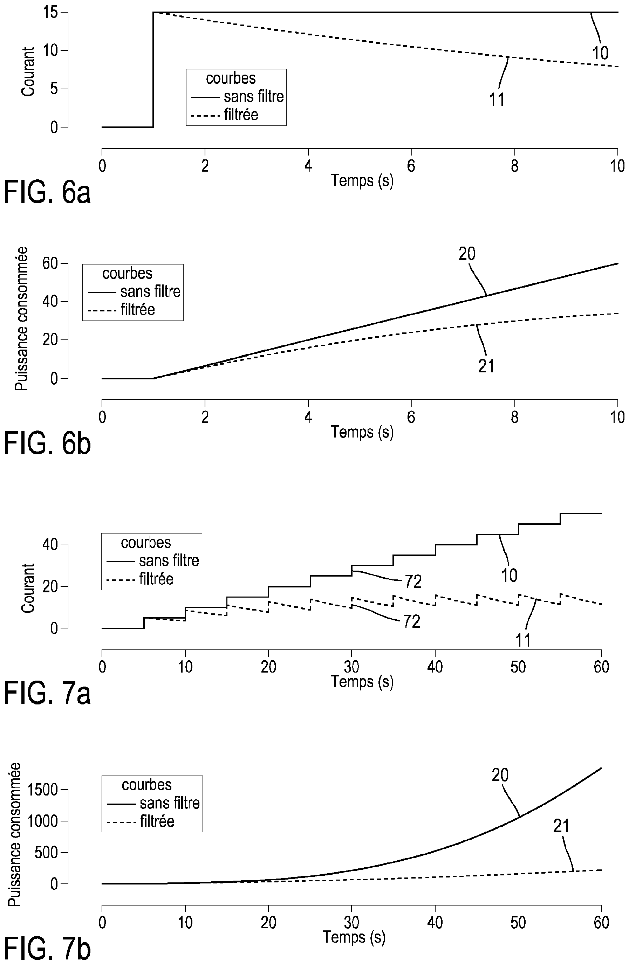

(cas des figures 5 à 7), la constante A étant un nombre réel positif, la constante B étant un nombre réel, la constante $\tau$ étant un nombre réel positif. On a typiquement avec A= 15, B= 0, et $\tau$ = 14 dans le cas spécifique et non limitatif de la figure 6. On a donc la transformation suivante :

**Commande initiale:** pour $F_0(t) + \tilde{F}(t)$
**=>Commande transformée:** pour

$$A.\exp\left(\left(\frac{-t}{\tau}\right)\right) + B + \tilde{F}(t)$$

Les valeurs inférieures ou supérieures précédemment données dans le cadre de la description de l'interface 101 pour la constante $\tau$ restent valables.

- ou un autre type de fonction, par exemple linéaire ou polynomiale ou autre ou plus complexe selon l'action du filtre passe haut 5.

Cette transformation de la commande initiale en la commande transformée est de préférence mise en œuvre par application du filtre passe haut 5 précédemment décrit.

Ce mode de réalisation de procédé selon l'invention comprend une mesure de la force exercée par l'actionneur 1, et un asservissement de la force exercée par l'actionneur 1 selon la commande transformée, typiquement par une boucle à régulateur à action Proportionnelle - Intégrale - Dérivée (PID).

Ce mode de réalisation de procédé selon l'invention est mis en œuvre sur une durée totale d'au moins 1 seconde, de préférence d'au moins 1,4 secondes, de préférence d'au moins 2 secondes, de préférence d'au moins 3 secondes, de préférence d'au moins 10 secondes.

Chacune des variantes des figures 4 à 8 de ce mode de réalisation de procédé selon l'invention correspond au cas pour lequel :

- le procédé selon l'invention est mis en œuvre à partir de t=0 s..
- A compter de la mise en œuvre du procédé selon l'invention :

  ○ On transforme la commande initiale en la commande transformée dans laquelle la partie basse fréquence initiale $F_0(t)$ est transformée (sauf si $F_0(t)$ est une fonction constante nulle, par exemple de t=0s à t=1s de la figure 6a et de t=0s à t=5s de la figure 7a) en la partie basse fréquence modifiée F(t) qui suit une fonction décroissante et pour laquelle, sur tout intervalle de temps de durée Δt entre un instant t et un instant t+Δt, la partie basse fréquence modifiée F(t) décroit d'une valeur X sensiblement égale à 10% de la valeur initiale de la partie basse fréquence modifiée F(t) à l'instant t, pour une durée Δt de l'intervalle de temps sensiblement égale à 0,5 seconde
  ○ L'utilisateur 4 ne ressent pas la diminution de la force exercée par l'actionneur 1, même si celle-ci diminue ; cela permet une économie d'énergie dissipée et l'utilisation d'un moteur ou actionneur 1 de faible dimensionnement.

Si F(t) correspond à une consigne de force pour l'actionneur 1, A et B ont une dimension de Force, typiquement en Newton.

Si F(t) correspond à une partie du signal de commande pour l'actionneur 1, A et B ont une dimension de tension ou intensité électrique, typiquement en Volt ou Ampère.

Pour chacune des figures 4 à 8, F(t) correspond à une partie du signal de commande pour l'actionneur 1, A et B ont une dimension d'intensité électrique, typiquement en Ampère, et la force ou le couple produit par une l'interface 101 est proportionnelle au courant électrique du signal $F(t) + \tilde{F}(t)$ en ordonnée des figures 4 à 8.

Sur chacune des figures 4 à 8 :

- la référence 10 fait référence au signal de la commande initiale $F_0(t) + \tilde{F}(t)$
- la référence 11 fait référence au signal de la commande transformée $F(t) + \tilde{F}(t)$
- le signal de la commande transformée $F(t) + \tilde{F}(t)$ est obtenu par application du filtre passe haut 5 précédemment décrit
- la référence 20 fait référence à la puissance consommée par l'actionneur 1 si ce dernier était actionné par le signal de la commande initiale $F_0(t) + \tilde{F}(t)$

- la référence 21 fait référence à la puissance consommée par l'actionneur 1 lorsque ce dernier est actionné par le signal de la commande transformée $F(t)+\tilde{F}(t)$
- l'unité des axes des ordonnées des figures 4a, 5a, 6a, 7a, et 8a est proportionnelle à des Ampères,
- l'unité des axes des ordonnées des figures 4b, 5b, 6b, 7b, et 8b est proportionnelle à des Joules
- l'unité des axes des abscisses des figures 4a, 4b, 5a, 5b, 6a, 6b, 7a, 7b, et 8a, 8b est la seconde.

Le cas des figures 4a et 4b correspond au cas où la partie haute fréquence $\tilde{F}(t)$ comprend une bosse 12 que l'on retrouve donc sur les deux courbes 10 et 11.

Le cas des figures 5a et 5b correspond au cas où la commande initiale $F_0(t) + \tilde{F}(t)$ correspond à des créneaux alternatifs.

La partie haute fréquence $\tilde{F}(t)$ comprend donc des variations brutales 22 que l'on retrouve donc sur les deux courbes 10 et 11.

La partie basse fréquence modifiée F(t) est la fonction exponentielle de la forme

$$F(t) = A.\exp\left( \left(\frac{-t}{\tau}\right) \right) + B$$

où les valeurs de A, B (et optionnellement $\tau$) peuvent changer à chaque créneau.

On voit bien sur la figure 5a que la partie basse fréquence modifiée F(t) suit « en amplitude » une fonction globalement décroissante sur $\Delta t$, c'est-à-dire que :

- lorsque cette fonction F(t) est négative, elle est globalement croissante sur $\Delta t$
- lorsque cette fonction F(t) est positive, elle est globalement décroissante sur $\Delta t$.

Le cas des figures 6a et 6b correspond au cas où la commande initiale $F_0(t) + \tilde{F}(t)$ correspond à une constante non nulle (à partir de t=1s).

A partir de t=1s, $F_0(t)$ est donc une constante, alors que la partie basse fréquence modifiée F(t) est une

$$F(t) = A.\exp\left( \left(\frac{-t}{\tau}\right) \right) + B$$

fonction de la forme .

Le cas des figures 7a et 7b correspond au cas où la commande initiale $F_0(t) + \tilde{F}(t)$ correspond à des marches d'escalier.

La partie haute fréquence $\tilde{F}(t)$ comprend donc des variations brutales 72 que l'on retrouve donc sur les deux courbes 10 et 11.

La partie basse fréquence modifiée F(t) est une

$$F(t) = A.\exp\left( \left(\frac{-t}{\tau}\right) \right) + B$$

fonction de la forme .

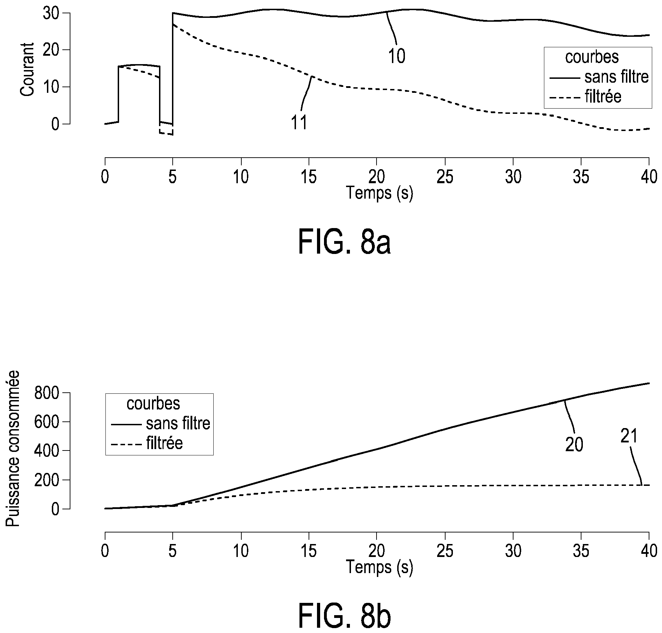

Le cas des figures 8a et 8b correspond à un cas plus complexe, où la commande initiale $F_0(t) + \tilde{F}(t)$ comprend des variations brutales, des ondulations, etc.

Bien sûr, l'invention n'est pas limitée aux exemples qui viennent d'être décrits et de nombreux aménagements peuvent être apportés à ces exemples sans sortir du cadre de l'invention.

Par exemple, dans des variantes combinables entre elles et aux précédents modes de réalisation décrits :

- l'actionneur 1 est agencé pour exercer des efforts selon plusieurs axes d'interface comprenant un ou plusieurs axes de translation, l'actionneur 1 étant agencé pour exercer des efforts parallèlement à chacun de ces axes de translation, et/ou un ou plusieurs axes de rotation, l'actionneur 1 étant agencé pour exercer un couple autour de chacun de ces axes de rotation. Dans ce cas, les moyens de commande 2 sont agencés et/ou programmés pour recevoir la commande initiale, transformer la commande initiale en la commande transformée et commander l'actionneur selon la commande transformée selon au moins un de ces axes, de préférence selon plusieurs de ces axes d'interface ou même selon tous ces axes d'interface. L'actionneur 1 exerce des efforts selon plusieurs axes d'interface, et le procédé selon l'invention est appliqué à au moins un de ces axes d'interface de préférence à plusieurs de ces axes d'interface ou même à tous ces axes d'interface, et/ou
- l'actionneur 1 peut par exemple être :

    * une manette, ou
    * un muscle et/ou actionneur biologique et/ou chimique, par exemple dans la cas d'une interface 101 pour l'exercice musculaire. Dans ce cas, la commande transformée est envoyée à l'actionneur/muscle via des électrodes collées sur la peau entourant l'actionneur/muscle d'un utilisateur, et/ou

- ce n'est pas nécessairement la partie basse fréquence modifiée F(t), mais au minimum la moyenne arithmétique de F(t) qui suit en amplitude (ou en valeur absolue) une fonction décroissante et pour laquelle, sur tout intervalle de temps de durée $\Delta t$ entre un instant t et un instant t+$\Delta t$, la la moyenne arithmétique de la partie basse fréquence modifiée F(t) décroit en amplitude (ou en valeur absolue) d'une valeur X inférieure ou égale à 10% de la valeur initiale de la partie basse fréquence modifiée F(t) à l'instant t, la durée $\Delta t$ de l'intervalle de temps étant supérieure ou égale à 0,3 seconde, et/ou
- les filtres 6 et 7 sont optionnels. Ainsi, dans une variante en référence à la figure 2, l'embranchement comprenant le filtre 6 est supprimé (il n'y a donc plus deux embranchements en parallèle), et le deuxième embranchement comprend le filtre 5 mais a son filtre 7 supprimé. Le filtre passe-haut 5 à lui seul, avec ses caractéristiques techniques telles que définies précédemment dans la description, peut permettre de transformer la partie basse fréquence initiale $F_0(t)$

en la partie basse fréquence modifiée F(t) sans modifier la partie haute fréquence $\tilde{F}(t)$ de sorte que la commande transformée soit égale à F(t) + $\tilde{F}(t)$.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

**Revendications**

1. Procédé de commande d'une interface (101) à retour de force haptique, ladite interface comprenant un actionneur (1), ledit procédé comprenant:

   • une réception d'une commande initiale agencée pour commander l'actionneur de sorte qu'une force exercée par l'actionneur ou la commande initiale soit égale à :

      ◦ une partie basse fréquence initiale $F_0(t)$ ne comprenant que des fréquences inférieures à une fréquence de coupure,
      ◦ plus une éventuelle partie haute fréquence $\tilde{F}(t)$ ne comprenant que des fréquences supérieures à la fréquence de coupure,

   • une transformation de la commande initiale en une commande transformée dans laquelle la partie basse fréquence initiale $F_0(t)$ est transformée en une partie basse fréquence modifiée $\tilde{F}(t)$

      - une commande de l'actionneur selon la commande transformée,

   le procédé étant **caractérisé en ce que** la partie basse fréquence modifiée
   suit en amplitude une fonction décroissante et pour laquelle, sur tout intervalle de temps de durée $\Delta t$ entre un instant t et un instant t+$\Delta t$, la partie basse fréquence modifiée F(t) décroit d'une valeur X inférieure ou égale à 10% de la valeur initiale de la partie basse fréquence modifiée F(t) à l'instant t, la durée $\Delta t$ de l'intervalle de temps étant supérieure ou égale à 0,3 seconde.

2. Procédé selon l'une quelconque des revendications précédentes, **caractérisé en ce que** la valeur X est supérieure ou égale à 1%, de préférence 5%, de la valeur initiale de F(t) à l'instant t.

3. Procédé selon l'une quelconque des revendications précédentes, **caractérisé en ce que** la durée $\Delta t$ de

l'intervalle de temps est supérieure ou égale à 0,5 seconde, de préférence supérieure ou égale à 1 seconde, de préférence supérieure ou égale à 1,4 secondes, de préférence supérieure ou égale à 2 secondes, de préférence supérieure ou égale à 3 secondes.

4. Procédé selon l'une quelconque des revendications précédentes, **caractérisé en ce que** la durée $\Delta t$ de l'intervalle de temps est inférieure ou égale à 60 secondes, de préférence inférieure ou égale à 30 secondes, de préférence inférieure ou égale à 10 secondes.

5. Procédé selon l'une quelconque des revendications précédentes, **caractérisé en ce que** la fonction décroissante de la partie basse fréquence modifiée F(t) en fonction du temps t est une fonction exponentielle de la forme $$F(t) = A.\exp\left(\left(\frac{-t}{\tau}\right)\right) + B$$ , la constante A étant un nombre réel positif, la constante B étant un nombre réel, la constante $\tau$ étant un nombre réel positif.

6. Procédé selon la revendication 5, **caractérisé en ce que** la constante $\tau$ est un nombre réel positif supérieur ou égal à 1 seconde, de préférence supérieur ou égal à 5 secondes, de préférence supérieur ou égal à 10 secondes.

7. Procédé selon la revendication 5 ou 6, **caractérisé en ce que** la constante $\tau$ est un nombre réel positif inférieur ou égal à 60 secondes, de préférence inférieur ou égal à 50 secondes, de préférence inférieur ou égal à 40 secondes.

8. Procédé selon l'une quelconque des revendications précédentes, **caractérisé en ce que** la transformation de la commande initiale en la commande transformée comprend une application d'un filtre passe haut (5).

9. Procédé selon l'une quelconque des revendications précédentes, **caractérisé en ce qu'**il comprend une mesure de la force exercée par l'actionneur, et un asservissement de la force exercée par l'actionneur selon la commande transformée.

10. Procédé selon l'une quelconque des revendications précédentes, **caractérisé en ce qu'**il est mis en œuvre sur une durée totale d'au moins 1 seconde, de préférence d'au moins 1,4 secondes, de préférence d'au moins 2 secondes, de préférence d'au moins 3 secondes, de préférence d'au moins 10 secondes.

11. Procédé selon l'une quelconque des revendications précédentes, **caractérisé en ce que** l'actionneur exerce des efforts selon plusieurs axes, ledit procédé étant appliqué à au moins un de ces axes.

12. Procédé selon l'une quelconque des revendications précédentes, **caractérisé en ce que** la fréquence de coupure est inférieure ou égale à 10Hz.

13. Interface (101) à retour de force haptique, comprenant :

> - des moyens de commandes (2), agencés et/ou programmés pour :
>
> > • recevoir une commande initiale agencée pour commander un actionneur de sorte qu'une force exercée par l'actionneur ou la commande initiale soit égale à :
> >
> > > ◦ une partie basse fréquence initiale $F_0(t)$ ne comprenant que des fréquences inférieures à une fréquence de coupure,
> > > ◦ plus une éventuelle partie haute fréquence $\tilde{F}(t)$ ne comprenant que des fréquences supérieures à la fréquence de coupure,
> >
> > • transformer la commande initiale en une commande transformée dans laquelle la partie basse fréquence initiale $F_0(t)$ est transformée en une partie basse fréquence modifiée F(t) - une commande de l'actionneur selon la commande transformée,
>
> le procédé étant **caractérisé en ce que** la partie basse fréquence modifiée
> suit en amplitude une fonction décroissante et pour laquelle, sur tout intervalle de temps de durée Δt entre un instant t et un instant t+Δt, la partie basse fréquence modifiée F(t) décroit d'une valeur X inférieure ou égale à 10% de la valeur initiale de la partie basse fréquence modifiée F(t) à l'instant t, la durée Δt de l'intervalle de temps étant supérieure ou égale à 0,3 seconde.

**Patentansprüche**

1. Verfahren zum Steuern einer Schnittstelle (101) mit haptischer Kraftrückkopplung, die Schnittstelle umfassend einen Aktuator (1), das Verfahren umfassend:

> • Empfangen eines ursprünglichen Befehls, der zum Steuern des Aktuators so eingerichtet ist, dass eine durch den Aktuator oder den ursprünglichen Befehl ausgeübte Kraft gleich Folgendem ist:
>
> > ◦ einem ursprünglichen Niederfrequenzanteil Fo(t), umfassend nur Frequenzen unterhalb einer Grenzfrequenz,
> > ◦ plus einem eventuellen Hochfrequenzanteil $\tilde{F}(t)$, umfassend nur Frequenzen oberhalb der Grenzfrequenz,
>
> • Transformieren des ursprünglichen Befehls in einen transformierten Befehl, in dem der ursprüngliche Niederfrequenzanteil $F_0(t)$ in einen modifizierten Niederfrequenzanteil F(t) transformiert wird
> • Steuern des Aktuators gemäß dem transformierten Befehl,
> wobei das Verfahren **dadurch gekennzeichnet ist, dass** der modifizierte Niederfrequenzanteil in der Amplitude einer abnehmenden Funktion folgt und für die, über jedes Zeitintervall mit der Dauer Δt zwischen einem Zeitpunkt t und einem Zeitpunkt t+Δt, der modifizierte Niederfrequenzanteil F(t) um einen Wert X abnimmt, der kleiner als oder gleich 10 % des ursprünglichen Werts des modifizierten Niederfrequenzanteils F(t) zu dem Zeitpunkt t ist, wobei die Dauer Δt des Zeitintervalls größer als oder gleich 0,3 Sekunden ist.

2. Verfahren nach einem der vorstehenden Ansprüche, **dadurch gekennzeichnet, dass** der Wert X größer als oder gleich 1 %, vorzugsweise 5 %, des ursprünglichen Werts von F(t) zu dem Zeitpunkt t ist.

3. Verfahren nach einem der vorstehenden Ansprüche, **dadurch gekennzeichnet, dass** die Dauer Δt des Zeitintervalls größer als oder gleich 0,5 Sekunden, vorzugsweise größer als oder gleich 1 Sekunde, vorzugsweise größer als oder gleich 1,4 Sekunden, vorzugsweise größer als oder gleich 2 Sekunden, vorzugsweise größer als oder gleich 3 Sekunden ist.

4. Verfahren nach einem der vorstehenden Ansprüche, **dadurch gekennzeichnet, dass** die Dauer Δt des Zeitintervalls kleiner als oder gleich 60 Sekunden, vorzugsweise kleiner als oder gleich 30 Sekunden, vorzugsweise kleiner als oder gleich 10 Sekunden ist.

5. Verfahren nach einem der vorstehenden Ansprüche, **dadurch gekennzeichnet, dass** die abnehmende Funktion des modifizierten Niederfrequenzanteils F(t) in Abhängigkeit von der Zeit t eine Exponentialfunktion der Form

$$F(t) = A.\exp\left(\left(\frac{-t}{\tau}\right)\right) + B$$

ist, wobei die Konstante A eine positive reelle Zahl ist, die Konstante B eine reelle Zahl ist, die Konstante τ eine positive reelle Zahl ist.

6. Verfahren nach Anspruch 5, **dadurch gekennzeichnet, dass** die Konstante τ eine positive reelle Zahl ist, die größer als oder gleich 1 Sekunde, vorzugsweise größer als oder gleich 5 Sekunden, vorzugsweise größer als oder gleich 10 Sekunden ist.

7. Verfahren nach Anspruch 5 oder 6, **dadurch gekennzeichnet, dass** die Konstante τ eine positive reelle Zahl ist, die kleiner als oder gleich 60 Sekunden, vorzugsweise kleiner als oder gleich 50 Sekunden, vorzugsweise kleiner als oder gleich 40 Sekunden ist.

8. Verfahren nach einem der vorstehenden Ansprüche, **dadurch gekennzeichnet, dass** das Transformieren des ursprünglichen Befehls in den transformierten Befehl eine Anwenden eines Hochpassfilters (5) umfasst.

9. Verfahren nach einem der vorstehenden Ansprüche, **dadurch gekennzeichnet, dass** es ein Messen der durch den Aktuator ausgeübten Kraft und ein Regeln der durch den Aktuator ausgeübten Kraft gemäß dem transformierten Befehl umfasst.

10. Verfahren nach einem der vorstehenden Ansprüche, **dadurch gekennzeichnet, dass** es über eine Gesamtdauer von mindestens 1 Sekunde, vorzugsweise mindestens 1,4 Sekunden, vorzugsweise mindestens 2 Sekunden, vorzugsweise mindestens 3 Sekunden, vorzugsweise mindestens 10 Sekunden durchgeführt wird.

11. Verfahren nach einem der vorstehenden Ansprüche, **dadurch gekennzeichnet, dass** der Aktuator Kräfte gemäß einer Vielzahl von Achsen ausübt, wobei das Verfahren auf mindestens eine dieser Achsen angewendet wird.

12. Verfahren nach einem der vorstehenden Ansprüche, **dadurch gekennzeichnet, dass** die Grenzfrequenz kleiner als oder gleich 10 Hz ist.

13. Schnittstelle (101) mit haptischer Kraftrückkopplung, umfassend:

    - Steuerungsmittel (2), die eingerichtet und/oder programmiert sind zum:

        • Empfangen eines ursprünglichen Befehls, der zum Steuern eines Aktuators so eingerichtet ist, dass eine durch den Aktuator oder den ursprünglichen Befehl ausgeübte Kraft gleich Folgendem ist:

            o einem ursprünglichen Niederfrequenzanteil Fo(t), umfassend nur Frequenzen unterhalb einer Grenzfrequenz,

            ○ plus einem eventuellen Hochfrequenzanteil $\tilde{F}(t)$, umfassend nur Frequenzen oberhalb der Grenzfrequenz,

        • Transformieren des ursprünglichen Befehls in einen transformierten Befehl, in dem der ursprüngliche Niederfrequenzanteil $F_0(t)$ in einen modifizierten Niederfrequenzanteil F(t) transformiert wird

        • Steuern des Aktuators gemäß dem transformierten Befehl,

        wobei das Verfahren **dadurch gekennzeichnet ist, dass** der modifizierte Niederfrequenzanteil in der Amplitude einer abnehmenden Funktion folgt und für die, über jedes Zeitintervall mit der Dauer Δt zwischen einem Zeitpunkt t und einem Zeitpunkt t+Δt, der modifizierte Niederfrequenzanteil F(t) um einen Wert X abnimmt, der kleiner oder gleich 10 % des ursprünglichen Werts des modifizierten Niederfrequenzanteils F(t) zu dem Zeitpunkt t ist, wobei die Dauer Δt des Zeitintervalls größer als oder gleich 0,3 Sekunden ist.

## Claims

1. Method for controlling an interface (101) with haptic force feedback, said interface comprising an actuator (1), said method comprising:

    • receiving an initial command arranged for controlling the actuator so that a force exerted by the actuator or the initial command is equal to:

        ○ an initial low-frequency portion $F_0(t)$ comprising only frequencies less than a cut-off frequency,

        ○ plus an optional high-frequency portion $F(t)$ comprising only frequencies greater than the cut-off frequency,

    • converting the initial command to a converted command in which the initial low-frequency portion $F_0(t)$ is converted to a modified low-frequency portion F(t),

    • controlling the actuator according to the converted command, the method being **characterized in that** the amplitude of the modified low-frequency portion follows a decreasing function, and for which, over any time interval of duration Δt between a time t and a time t+Δt, the modified low-frequency portion F(t) decreases by a value X less than or equal to 10% of the initial value of the modified low-frequency portion F(t) at time t, the duration Δt of the time interval being greater than or equal to 0.3 second.

2. Method according to any one of the preceding claims, **characterized in that** the value X is greater than or equal to 1%, preferably 5%, of the initial value of F(t) at time t.

3. Method according to any one of the preceding claims, **characterized in that** the duration Δt of the time interval is greater than or equal to 0.5 second, preferably greater than or equal to 1 second, preferably greater than or equal to 1.4 seconds, preferably greater than or equal to 2 seconds, preferably greater than or equal to 3 seconds.

4. Method according to any one of the preceding claims, **characterized in that** the duration Δt of the time interval is less than or equal to 60 seconds, preferably less than or equal to 30 seconds, preferably less than or equal to 10 seconds.

5. Method according to any one of the preceding claims, **characterized in that** the decreasing function of the modified low-frequency portion F(t) as a function of time t is an exponential function in the form F(t) = $A.\,exp\left(\left(\dfrac{-t}{\tau}\right)\right) + B$ , the constant A being a positive real number, the constant B being a real number, the constant $\tau$ being a positive real number.

6. Method according to claim 5, **characterized in that** the constant $\tau$ is a positive real number greater than or equal to 1 second, preferably greater than or equal to 5 seconds, preferably greater than or equal to 10 seconds.

7. Method according to claim 5 or 6, **characterized in that** the constant $\tau$ is a positive real number less than or equal to 60 seconds, preferably less than or equal to 50 seconds, preferably less than or equal to 40 seconds.

8. Method according to any one of the preceding claims, **characterized in that** the conversion of the initial command to the converted command comprises applying a high-pass filter (5).

9. Method according to any one of the preceding claims, **characterized in that** it comprises measuring the force exerted by the actuator, and feedback of the force exerted by the actuator according to the converted command.

10. Method according to any one of the preceding claims, **characterized in that** it is implemented over a total duration of at least 1 second, preferably at least 1.4 seconds, preferably at least 2 seconds, preferably at least 3 seconds, preferably at least 10 seconds.

11. Method according to any one of the preceding claims, **characterized in that** the actuator exerts forces along several axes, said method being applied to at least one of these axes.

12. Method according to any one of the preceding claims, **characterized in that** the cut-off frequency is less than or equal to 10 Hz.

13. Interface (101) with haptic force feedback, comprising:

- control means (2), arranged and/or programmed for:

• receiving an initial command arranged for controlling an actuator so that a force exerted by the actuator or the initial command is equal to:

◦ an initial low-frequency portion $F_0$(t) comprising only frequencies less than a cut-off frequency,
◦ plus an optional high-frequency portion $\tilde{F}$(t) comprising only frequencies greater than the cut-off frequency,

• converting the initial command to a converted command in which the initial low-frequency portion $F_0$(t) is converted to a modified low-frequency portion F(t),
• controlling the actuator according to the converted command.

**characterized in that** the amplitude of the modified low-frequency portion follows a decreasing function, and for which, over any time interval of duration Δt between a time t and a time t+Δt, the modified low-frequency portion F(t) decreases by a value X less than or equal to 10% of the initial value of the modified low-frequency portion F(t) at time t, the duration Δt of the time interval being greater than or equal to 0.3 second.

FIG. 1

FIG. 2

FIG. 3

FIG. 4a

FIG. 4b

FIG. 5a

FIG. 5b

FIG. 6a

FIG. 6b

FIG. 7a

FIG. 7b

FIG. 8a

FIG. 8b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2018074589 A1
- EP 2911039 A1
- US 2017168773 A1
- US 2014368440 A1